# EUROPÄISCHE PATENTSCHRIFT

(11) **EP 1 097 081 B1**
(45) Veröffentlichungstag und Bekanntmachung des Hinweises auf die Patenterteilung: **13.12.2006**
(21) Anmeldenummer: 00925187.7
(22) Anmeldetag: 08.04.2000
(51) Int. Cl.: B62M 25/02

(54) **SEILFÜHRUNG IN EINEM SCHALTER FUR FAHRRADGETRIEBE**
CABLE GUIDE ON A SHIFT LEVER FOR BICYCLE GEARS
SYSTEME DE GUIDAGE DE CABLE DANS UN ORGANE DE COMMANDE D'UN MECANISME DE CHANGEMENT DE VITESSE D'UNE BICYCLETTE

(30) Priorität: 14.05.1999 DE 19922328
(43) Veröffentlichungstag der Anmeldung: 09.05.2001
(73) Patentinhaber: SRAM Deutschland GmbH, 97404 Schweinfurt (DE)
(72) Erfinder: WESSEL, Robert, D-97080 Würzburg (DE)
(86) Internationale Anmeldenummer: PCT/EP2000/003155
(87) Internationale Veröffentlichungsnummer: WO 2000/069714

(56) Entgegenhaltungen:
- EP-A- 0 628 475
- US-A- 5 732 598

## Beschreibung

Die Erfindung betrifft einen Schalter für ein Getriebe an einem Fahrrad gemäß dem Oberbegriff des Anspruchs 1.

Aus der europäischen Patentanmeldung EP 0 676 325 A2 ist ein Drehgriffschalter für ein Fahrrad bekannt geworden, mit welchem über einen Bowdenzug Gangstufen in einem Fahrradgetriebe gewechselt werden können. Das Seil des Bowdenzuges wird über eine Seilspule bei deren Verdrehung in einer Aufwikkeldrehrichtung in das Gehäuse des Schalters eingezogen, wobei eine im Getriebe auf das Seil angreifende Zugkraft überwunden werden muß. Die Zugkraft hält das Seil im Schalter und im Bowdenzug gespannt, weshalb auch dann das Seil an der Seilspule anliegt, wenn die Seilspule in einer Freigabedrehrichtung verdreht wird, wodurch das Seil zum Getriebe des Fahrrades hin freigegeben wird. Gemäß den Fig. 3,5 und 6 wird der Weg des Seiles insbesondere von seiner Befestigung auf der Seilspule bis zum Verlassen des Gehäuses dargestellt, wobei es dort keine ausgeprägte Führung des Seiles gibt, die mit der Umlenkung des Seiles zu tun hat. Es können nämlich beim Verdrehen der Seilspule in der Aufwickeldrehrichtung Blockierungen im Getriebe des Fahrrades auftreten, wodurch das Seil vorübergehend an Spannung verliert und insbesondere im Schalter zwischen dem Austritt des Seiles aus dem Gehäuse und seinem Ende auf der Seilspule einen Stau bewirken kann, der sich darin äußert, daß das Seil sich bogenförmig im Gehäuse verteilt und von seiner eigentlichen Lage auf der Seilspule abhebt.

Für den vorgenannten Fall sieht die vorliegende Erfindung eine Führung des Seiles zwischen der Seilspule und dem Gehäuseaustritt vor, die verhindert, daß das Seil sich bei Entspannung durch Gangwechselverzögerungen im Getriebe nennenswert von seiner Position im gespannten Zustand entfernt. Da das Seil an der Seilspule meistens mit einem Nippel befestigt ist, kann es darüber hinaus auch vorkommen, daß bei Entspannung des Seiles unter den vorgenannten Bedingungen bei Drehung der Seilspule in der Freigabedrehrichtung sich der Nippel aus seiner Verankerung in der Seilspule heraushebt und zu Verklemmungen im Schalter führt.

Die Erfindung hat es sich somit zur Aufgabe gemacht, ein eigentlich nur auf Zug belastbares Seil eines Bowdenzuges auf seinem Weg zwischen seiner Befestigung auf einer Seilspule mit einem Nippel und seinem Austritt aus einem Gehäuseteil des Schalters derart zu führen, daß das Seil bei Betätigung der Seilspule in der Freigabedrehrichtung sich nicht von seiner unter Zugbelastung eingenommenen Position entfernt, insbesondere dann, wenn der Nippel mit der Seilspule fest verbunden ist.

Die Lösung dieser Aufgabe wird durch die Merkmale im kennzeichnenden Teil des Anspruchs 1 beschrieben. Ausgestaltungen sind den Unteransprüchen zu entnehmen.

Ein Ausführungsbeispiel einer Seilführung in einem Schalter für Fahrradgetriebe wird anhand zweier Teilschnitte erläutert. Es zeigen:
- Fig. 1: eine Seilspule in einem Gehäuseteil mit einem Seil und einem Steg am Gehäuseteil;
- Fig. 2: den Steg im Gehäuseteil mit einer Führungskante zur Führung des Seiles unter Ausbildung eines Seilkanals in einer Seilführung der Seilspule;
- Fig. 3: den Seilkanal gemäß Fig. 1, gebildet durch ein Hohlprofil am Steg in Verbindung mit der Seilführung an der Seilspule in Ausschnittdarstellung.

Wird mit 1 ein Gehäuseteil eines Schalters für Fahrradgetriebe bezeichnet, so ist innerhalb des Gehäuseteils 1 eine Seilspule 2 drehbar angeordnet, auf der ein Seil 3 in einer Seilführung 4 geführt ist, wobei das Seil 3 in einem Nippel 5 endet, welcher an der Seilspule 2 befestigt ist. Die Seilspule 2 ist in einer Aufwikkeldrehrichtung A und in einer Freigabedrehrichtung F betätigbar, wodurch die Schaltelemente in einem Fahrradgetriebe zum Wechseln der einzelnen Gangstufen veranlaßt werden. Das Seil 3 ist üblicherweise durch eine Feder im Getriebe derart vorgespannt, daß es immer dem Seilzug folgend eine geradlinige Position dort einnimmt, wo es nicht durch Profile oder Kanten geführt ist. Da es jedoch bei einigen Fahrradgetrieben, insbesondere dann, wenn das Fahrrad nicht bewegt wird, vorkommt, daß die im Getriebe auf das Seil 3 wirkende Feder dieses nicht einziehen kann, da Kupplungen oder Zahnräder nicht ohne Drehung des Getriebes ineinander greifen können, wird bei Betätigung des Seiles 3 in der Freigabedrehrichtung F ein Druck erzeugt, der das Seil 3 an die nicht geführten Stellen, insbesondere im Schalter aus seiner an der Seilspule 2 vorbestimmten Position ausheben kann. Wenn die Seilspule 2 in der Aufwickeldrehrichtung A betätigt wird, so wird der Nippel 5 von einem Widerlager 6 mitgenommen und das Seil 3 angezogen. Für den Fall, daß bei Betätigung der Seilspule 2 in der Freigabedrehrichtung das Seil 3 vom Getriebe aus den vorgenannten Gründen nicht aufgenommen werden kann, könnte sich der Nippel 5 von dem Widerlager 6 in der Seilspule 2 abheben und seinen vorbestimmten Platz verlassen und Verklemmungen zwischen der Seilspule 2 und dem Gehäuseteil 1 verursachen. Um dies zu verhindern, ist eine Halteeinrichtung geschaffen worden, die den Nippel 5 sowohl in der Aufwickeldrehrichtung A als auch in der Freigabedrehrichtung F auch unter ungünstigen Schaltbedingungen im Getriebe an den ihm angestammten Platz hält. Es ist aus diesem Grund ein Sperrhaken 7 angeordnet, der einen Zahn 10 aufweist, der sich über die Stirnfläche des Nippels 5 legt, nachdem der Nippel 5 gegen das Widerlager 6 angeschlagen ist. Diese Position erreicht der Nippel 5 bei der Montage des Seils 3 dadurch, daß er einfach zwischen einer Schräge 12 an der Seilspule 2 und einer Kontur 13 am Sperrhaken 7 eingezogen wird, wodurch der um einen Biegequerschnitt 11 federnde Sperrhaken 7 seinen Zahn 10 hinter die Stirnfläche des Nippels 5 schnappen läßt.

Das Gehäuseteil 1 weist einen Steg 8 mit einer Führungskante 9 auf, die zumindest teilweise dem Verlauf des Seiles 3 folgt und einen Seilkanal 14 mit der Seilführung 4 bildet, so daß das Seil 3 bei Betätigung der Seilspule 2 in der Seilfreigabedrehrichtung F innerhalb des Schalters keine unkontrollierten Positionen einnehmen kann. Das Seil wird vielmehr aus dem Gehäuseteil 1 des Schalters ausgeschoben und erzeugt im Getriebe zusätzlich zur Zugkraft der Feder eine Schubkraft, die den Gangwechsel im Getriebe unterstützt.

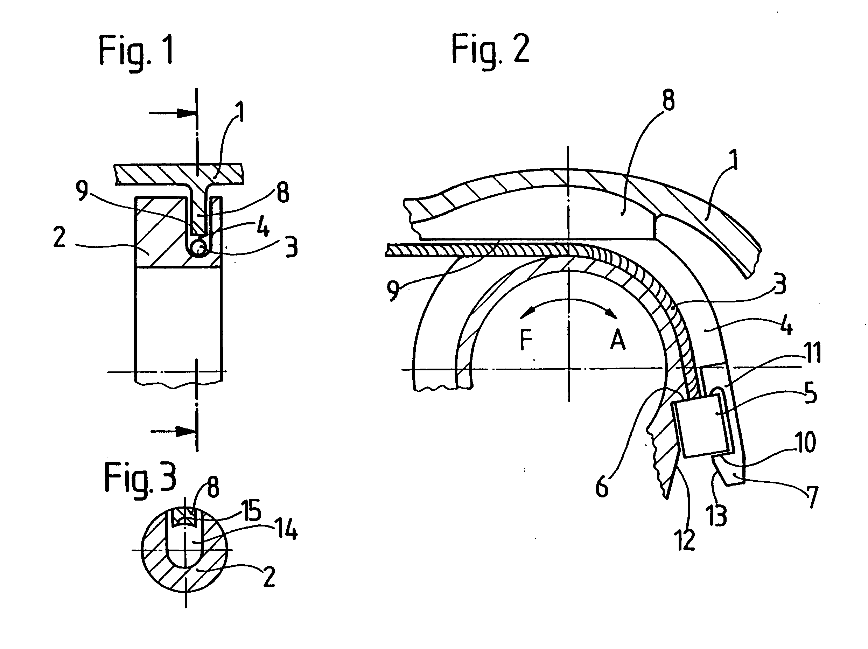

Der Seilkanal 14 gemäß Fig. 3 ist zumindest an einer Stelle des Umfanges der Seilführung 4 derart ausgeführt, daß die Führungskante 9 bei der Montage des Seiles 3 dieses in die vorbestimmte Richtung zu einer Öffnung im Gehäuseteil 1 des Schalters lenkt. Die Führungskante 9 ist eine empirisch durch Versuche ermittelte Kurve, die im Seil 3 an seinem kritischen Verlauf durch das Gehäuseteil 1 folgt und ein Hohlprofil, insbesondere einen Radius 15, aufweisen kann, der das Seil 3 in der Seilführung 4 insbesondere dann besser führen kann, wenn die Seilführung 4 einen von der Darstellung gemäß Fig. 1 und 3 abweichenden Verlauf hat. Dieser Verlauf kann soweit gehen, daß das Seil 3 lediglich um einen zylindrischen Bereich der Seilspule 2 gewickelt wird, wobei der Steg 8 mit seinem Hohlprofil das Seil 3 auch in Richtung der Mantellinien auf der Seilspule 2 führen kann.

## Patentansprüche

1. Schalter als Fernbedienung für den Wechsel von Gangstufen an einem Getriebe an einem Fahrrad mit einem Gehäuseteil (1) und einer Seilspule (2) mit einer Seilführung (4), die der Benutzer des Fahrrades in einer Aufwickeldrehrichtung (A) zum Aufwickeln eines Seiles (3) oder in einer Freigabedrehrichtung (F) zur Freigabe des Seiles (3) betätigen kann, wobei ein Ende des Seils (3) mit der Seilspule (2) zumindest in einer der beiden Drehrichtungen (A,F) eine Mitnahmeverbindung eingeht,
**dadurch gekennzeichnet,**
**daß** das Gehäuseteil (1) einen Steg (8) mit einer Führungskante (9) aufweist, die gemeinsam mit der Seilführung (4) einen Seilkanal (14) für das Seil (3) bildet, aus welchem das Seil (3) nicht ausweichen kann, wenn die Seilspule (2) in der Freigabedrehrichtung (F) betätigt wird für den Fall, daß das andere Ende des Seils (3) vom Getriebe nicht nachgezogen bzw. aufgenommen wird.

2. Schalter nach Anspruch 1,
**dadurch gekennzeichnet,**
**daß** am Ende des Seiles (3) ein Nippel (5) angeordnet ist, der die Mitnahmeverbindung zwischen dem Seil (3) und der Seilspule (2) in tangentialer Richtung in beiden Drehrichtungen (A,F) herstellt.

3. Schalter nach Anspruch 1 oder 2,
**dadurch gekennzeichnet,**
**daß** der Seilkanal (14) zumindest an der kritischen Stelle des Seilverlaufs gebildet wird, nämlich dort, wo das Seil (3) die Seilspule (2) verläßt.

4. Schalter nach einem der Ansprüche 1 bis 3,
**dadurch gekennzeichnet,**
**daß** die Führungskante (9) einer durch Versuche ermittelten Kurve folgt.

5. Schalter nach einem der Ansprüche 1 bis 4,
**dadurch gekennzeichnet,**
**daß** die Führungskante (9) des Steges (8) ein Hohlprofil, insbesondere einen Radius (15), aufweist, der im Falle einer weniger gut ausgeprägten Seilführung (4) zur Bildung des Seilkanals (14) beiträgt.

6. Schalter nach einem der Ansprüche 1 bis 5,
**dadurch gekennzeichnet,**
**daß** sich der Nippel (5) in der Aufwickeldrehrichtung (A) gegen ein Widerlager (6) und in der Freigabedrehrichtung (F) gegen einen Zahn (10) eines Sperrhakens (7) anlegt.

7. Schalter nach Anspruch 2 oder 6,
**dadurch gekennzeichnet,**
**daß** der Sperrhaken (7) eine Kontur (13) aufweist, die gemeinsam mit einer Schräge (12) der Seilspule (2) eine Trichterform bildet, durch welche sich der Nippel (5) bei der Montage des Seiles (3) in seine arretierte Position an einem Widerlager (6) und hinter dem Zahn (10) des Sperrhakens (7) einziehen läßt.

8. Schalter nach Anspruch 6 oder 7,
**dadurch gekennzeichnet,**
**daß** der Sperrhaken (7) zur Unterstützung der Schnappbewegung einen einschnürten Biegequerschnitt (11) aufweist.

## Claims

1. Shift mechanism used to remotely operate gear changes in a set of bicycle gears, having a housing part (1) and a cable reel (2) with a cable guide (4) that the user of the bicycle can operate in a winding rotational direction (A) for winding up a cable (3) or in a releasing rotational direction (F) to release the cable (3), one end of the cable (3) entering into a driving connection with the cable reel (2), at least in one of the two rotational directions (A, F), **characterized in that** the housing part (1) has a bar (8) with a guiding edge (9) that, together with the cable guide (4), forms a cable channel (14) for the cable (3), from which the cable (3) cannot deviate when the cable reel (2) is operated in the releasing rotational direction (F) if the other end of the cable (3) is not tensioned or taken up by the set of gears.

2. Shift mechanism according to Claim 1, **characterized in that** the end of the cable (3) has arranged on it a nipple (5) that establishes the driving connection between the cable (3) and the cable reel (2) in the tangential direction in both rotational directions (A, F).

3. Shift mechanism according to Claim 1 or 2, **characterized in that** the cable channel (14) is formed at least at the critical point of the cable path, namely where the cable (3) leaves the cable reel (2).

4. Shift mechanism according to one of Claims 1 to 3, **characterized in that** the guiding edge (9) follows a curve determined by tests.

5. Shift mechanism according to one of Claims 1 to 4, **characterized in that** the guiding edge (9) of the bar (8) has a hollow profile, in particular a radius (15), which contributes to the formation of the cable channel (14) in the case of a cable guide (4) which is not so well pronounced.

6. Shift mechanism according to one of Claims 1 to 5, **characterized in that** the nipple (5) comes to rest against an abutment (6) in the winding rotational direction (A) and against a tooth (10) of a catch (7) in the releasing rotational direction (F).

7. Shift mechanism according to Claim 2 or 6, **characterized in that** the catch (7) has a contour (13) that, together with a bevel (12) on the cable reel (2), forms a funnel shape through which the nipple (5) can be pulled into its fixed position on an abutment (6) and behind the tooth (10) of the catch (7) when the cable (3) is being fitted.

8. Shift mechanism according to Claim 6 or 7, **characterized in that** the catch (7) has a reduced bending cross section (11) to assist the snap-fitting movement.

## Revendications

1. Organe de commande, en tant que télécommande pour le changement de vitesse sur un mécanisme de changement de vitesse d'une bicyclette, avec un élément de boîtier (1) et une bobine de câble (2) avec un guide-câble (4), que l'utilisateur de la bicyclette peut manoeuvrer dans un sens de rotation d'enroulement (A) pour enrouler un câble (3) ou dans un sens de rotation de libération (F) pour libérer le câble (3), une extrémité du câble (3) formant avec la bobine de câble (2) au moins dans l'un des deux sens de rotation (A,F) une liaison d'entraînement,
**caractérisé en ce que**
l'élément de boîtier (1) comporte un listel (8) avec une arête de guidage (9) qui en commun avec le guide-câble (4) forme un conduit de câble (14) pour le câble (3), duquel le câble (3) ne peut pas s'échapper lorsque la bobine de câble (2) est manoeuvrée dans le sens de rotation de libération (F) dans le cas où l'autre extrémité du câble (3) n'est pas entraînée ou réceptionnée par le mécanisme de changement de vitesse.

2. Organe de commande selon la revendication 1,
**caractérisé en ce que**
à l'extrémité du câble (3) est disposé un mamelon (5) qui assure la liaison d'entraînement entre le câble (3) et la bobine de câble (2) en direction tangentielle, dans les deux sens de rotation (A,F).

3. Organe de commande selon la revendication 1 ou 2, **caractérisé en ce que**
le conduit de câble (14) est formé au moins sur l'endroit critique du trajet de câble, à savoir à l'endroit où le câble (3) quitte la bobine de câble (2).

4. Organe de commande selon l'une quelconque des revendications 1 à 3,
**caractérisé en ce que**
l'arête de guidage (9) suit une courbe déterminée par des essais.

5. Organe de commande selon l'une quelconque des
revendications 1 à 4,
**caractérisé en ce que**
l'arête de guidage (9) du listel (8) comporte un profilé creux (15), notamment un rayon qui dans le cas d'un guide-câble (4) moins bien marqué contribue à la formation du conduit de câble (14).

6. Organe de commande selon l'une quelconque des revendications 1 à 5,
**caractérisé en ce que**
dans le sens de rotation d'enroulement (A), le mamelon (5) s'appuie contre une butée (6) et dans le sens de libération (F) contre une dent (10) d'un crochet de retenue (7).

7. Organe de commande selon la revendication 2 ou 6,
**caractérisé en ce que**
le crochet de retenue (7) présente un contour (13) qui en association avec une inclinaison (12) de la bobine de câble (2) crée la forme d'un entonnoir, à travers lequel le mamelon (5) pénètre lors du montage du câble (3) dans sa position arrêtée sur une butée (6) et derrière la dent (10) du crochet de retenue (7).

8. Organe de commande selon la revendication 6 ou 7,
**caractérisé en ce que**
pour assister le mouvement d'enclenchement, le crochet de retenue (7) comporte une section transversale de flexion contractée (11).
